# EUROPEAN PATENT APPLICATION

(11) **EP 4 300 291 A1**
(43) Date of publication of application: **03.01.2024**
(21) Application number: 23171926.1
(22) Date of filing: 05.05.2023
(51) Int. Cl.: G06F 8/61, G06F 11/30, G06F 11/34

(54) **SOFTWARE IMAGE SCORE FOR RECOMMENDING SOFTWARE IMAGES**

(30) Priority: 01.07.2022 IN 202241037988; 28.12.2022 US 202218147430
(71) Applicant: Juniper Networks, Inc., Sunnyvale, CA 94089 (US)
(72) Inventor: GUPTA, Manoj, Sunnyvale, 94089 (US); KATHARE, Gorakhanath, Sunnyvale, 94089 (US); BARUAH, Rupamjyoti Sarma, Sunnyvale, 94089 (US)
(74) Representative: D Young & Co LLP

(57) **Abstract**

Techniques are disclosed for recommending particular versions of a software image for installation on a network device. In one example, a cloud-based Wide-Area Network (WAN) assurance system determines, for a first entity, entities having similar entity profiles as an entity profile of the first entity. The system obtains historical information, such as historical performance information, for network devices of the entities having similar entity profiles as the entity profile of the first entity. The system computes, based on the historical information, software image scores for software images used by the network devices. The system outputs, for display, an indication specifying a recommended software image to install on a first network device of the first entity, the recommended software image selected based on the software image scores for the software images used by the network devices.

## Description

This application claims the benefit of U.S. Patent Application No. 18/147,430, filed December 28, 2022, which claims the benefit of an Indian Provisional Application No. 202241037988, which was filed on July 1, 2022, the entire content of which is incorporated herein by reference.

### TECHNICAL FIELD

This disclosure generally relates to computer networking.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

These network devices typically include mechanisms, such as management interfaces, for locally or remotely configuring the devices. By interacting with the management interface, a client can perform configuration tasks as well as perform operational commands to collect and view operational data of the managed devices. For example, the clients may configure interface cards of the device, adjust parameters for supported network protocols, specify physical components within the device, modify routing information maintained by a router, access software modules and other resources residing on the device, and perform other configuration tasks. In addition, the clients may allow a user, such as a network administrator, to view current operating parameters, system logs, information related to network connectivity, network activity or other status information from the devices as well as view and react to event information received from the devices.

Network configuration services may be performed by multiple distinct devices, such as routers with service cards and/or dedicated service devices. Such services include connectivity services such as Layer Three Virtual Private Network (L3VPN), Virtual Private Local Area Network Service (VPLS), and Peer to Peer (P2P) services. Other services include network configuration services, such as Dot1q VLAN Service. Network management systems (NMSs) and NMS devices, also referred to as controllers or controller devices, may support these services such that an administrator can easily create and manage these high-level network configuration services.

### SUMMARY

Particular aspects are set out in the appended independent claims. Various optional embodiments are set out in the dependent claims.

In general, the disclosure describes techniques for recommending a version of a software image to be installed on a network device. In some examples, the recommendation may be output for display to, e.g., user such as a network administrator associated with an entity network. In accordance with the techniques of the disclosure, a network system such as a cloud-based Wide-Area Network (WAN) assurance system as described herein may evaluate (or "score") different versions of a software image with respect to a profile of an entity and indicate a recommended software image having a highest score for use within a particular entity's network environment.

In one example, a cloud-based WAN assurance system obtains a first entity profile for a first entity associated with one or more network devices. The system determines other entities that have similar entity profiles as the first entity profile. In some examples, the entities may be "customers" of the cloud-based WAN assurance system, such as different organizational entities, enterprises, or "tenants" of a data center. One or more network administrators associated with an entity may administrate or manage different user, customer, or networks comprising a number of different network devices. The system obtains historical information, such as historical performance information, for network devices of the other entities that have similar entity profiles. The system computes, based on the historical information, a software image score for one or more software images used by the network devices of the other entities. The system outputs, e.g., for display, an indication specifying a recommended software image for the first network device, the recommended software image selected based on the software image score for one or more software images used by the plurality of network devices.

The techniques of the disclosure may provide specific improvements to the computerrelated field of computer networking and software upgrade management that have practical applications. For example, the techniques of the disclosure may enable a cloud-based WAN assurance system to evaluate multiple different software versions with respect to the specific criteria and/or needs of a particular entity to identify a software image to recommend installing on one or more network device(s) of that entity. For example, a cloud-based WAN assurance system may recommend different software images to different entities that each meet the respective entity's varying needs with respect to performance, stability, features, and/or security. Additionally, the techniques of the disclosure may enable a cloud-based WAN assurance system to evaluate a recommended software image with respect to a software image presently installed upon the network devices managed by the network administrator and inform the network administrator as to the specific advantages projected to be gained (such as improvements in performance, stability, features, and/or security, etc.) so as to assist the network administrator in the decision of whether to upgrade one or more network devices within the network managed by the network administrator.

In one example, this disclosure describes a network system comprising processing circuitry configured to: determine, for a first entity, one or more entities having similar entity profiles as an entity profile of the first entity, the one or more entities having a plurality of network devices; compute, based on historical information for each network device of the plurality of network devices of the one or more entities having similar entity profiles as the entity profile of the first entity, one or more software image scores for one or more software images used by the plurality of network devices; and output, for display, an indication specifying a recommended software image to install on one or more network devices of the first entity, the recommended software image selected based on the one or more software image scores for the one or more software images used by the plurality of network devices.

In another example, this disclosure describes a method comprising: determining, by the network system and for a first entity, one or more entities having similar entity profiles as an entity profile of the first entity, the one or more entities having a plurality of network devices; computing, by the network system and based on historical information for each network device of the plurality of network devices of the one or more entities having similar entity profiles as the entity profile of the first entity, one or more software image scores for one or more software images used by the plurality of network devices; and outputting, by the network system and for display, an indication specifying a recommended software image to install on one or more network devices of the first entity, the recommended software image selected based on the one or more software image scores for the one or more software images used by the plurality of network devices.

In another example, this disclosure describes a computer-readable medium comprising instructions that, when executed, are configured to cause processing circuitry to execute a network system configured to: determine, for a first entity, one or more entities having similar entity profiles as an entity profile of the first entity, the one or more entities having a plurality of network devices; compute, based on historical information for each network device of the plurality of network devices of the one or more entities having similar entity profiles as the entity profile of the first entity, one or more software image scores for one or more software images used by the plurality of network devices; and output, for display, an indication specifying a recommended software image to install on one or more network devices of the first entity, the recommended software image selected based on the one or more software image scores for the one or more software images used by the plurality of network devices.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1 is a block diagram of an example network system for recommending a software image to install on a network device in accordance with the techniques of the disclosure.
FIG. 2 is a block diagram illustrating an example computer network system configured to recommend a software image for installation upon one or more network devices of an entity, in accordance with the techniques of the disclosure.
FIG. 3 is a block diagram illustrating an example network management system (NMS) configured in accordance with one or more techniques of this disclosure.
FIG. 4 is a flowchart illustrating an example operation in accordance with the techniques of the disclosure.
FIG. 5 is an illustration depicting an example user interface for displaying historical performance information that may be output by cloud-based WAN assurance platform to recommend a software image, in accordance with the techniques of the disclosure.
FIG. 6 is a block diagram illustrating an example including elements of an enterprise network that are managed using a controller device, in accordance with one or more techniques of this disclosure.

Like reference characters refer to like elements throughout the figures and description.

### DETAILED DESCRIPTION

In general, the disclosure describes techniques for recommending particular versions of a software image for installation upon one or more devices, such as one or more network devices. In some examples, a network system outputs recommendations for a user such as a network administrator who manages the network devices of a particular entity. An entity typically may be, for example, an organization, an enterprise, a corporation or business, a university, a data center tenant, a service provider, etc. Typically, an entity may operate a large number of devices, such as network devices, within a network managed by one or more network administrators associated with the entity.

A typical network device installs software in the form of a software image, such as an operating system, driver, Application Programming Interface (API), firmware, or application. However, selecting a software image with which to install upon or upgrade a device may be a challenging operation. Multiple different types of software images may be available to install to a network device. For example, different vendors may offer their version of the software image for installation. Further, a software image may have multiple versions, releases, or builds, such as an alpha version, a beta version, a stable version, a long-term support version, an experimental version, a developmental version, a "nightly" build. Older, thoroughly tested versions of the software image may provide more stability in operation, while newer versions of the software image may provide additional features or enhanced security. A user may desire to install a software image that satisfies certain criteria for a use case particular to an associated entity, e.g., provides high stability, latest features, improved security, or any combination thereof.

However, conventionally, no mechanism exists that enables a user to evaluate different versions of a software image to determine which software image is most suitable for use within network devices of a network of the entity. Conventionally, it is often recommended simply to use a latest or most recent version of a particular software image purely because such version is most recent. At most, minimal guidance may provided based on a maturity of a code base. For example, a software image may be selected based on release maturity (e.g., an alpha release, a beta release, or a stable release, in increasing order of stability). However, this approach may not be the best possible option for an entity. For example, different entities may place more emphasis on performance, stability, security, or new features within their network, and therefore a "one size fits all" approach may not be suitable for every entity's needs.

As described herein, a cloud-based WAN assurance platform may compute a software image score for a software image based on an entity profile of a particular entity. For example, the cloud-based WAN assurance platform may build a user or entity profile that takes into account historical performance criteria, such as device performance, network connectively, applications performance, and model and type of device. The cloud-based WAN assurance platform may identify users or entities having similar profiles but different software images. The cloud-based WAN assurance platform computes, for the entities having similar profiles, a software image score for one or more of the software images based on various historical performance criteria, such as a device health (e.g., a gateway health), a network health (e.g., a WAN link health), and/or an application health.

In some examples, the cloud-based WAN assurance platform computes the software image score using an averaging method that applies equal weights to each of the types of historical performance criteria for a specific device model and type for different entity deployments. For example, for a first software image "A.1", cloud-based WAN assurance platform may compute a device performance score of 75, a network connectivity score of 25, and an application performance score of 50, which may be averaged into a software image score of 50. As another example, for a second software image "A.2", the cloud-based WAN assurance platform may compute a device performance score of 100, a network connectivity score of 100, and an application performance score of 100, which may be averaged into a software image score of 100. Therefore, in this simplified scenario, second software image "A.2" may be more suitable for this entity profile than first software image "A.1". Therefore, cloud-based WAN assurance platform may recommend that any entity having a similar profile should use second software image "A.2".

Therefore, the techniques of the disclosure enable a cloud-based WAN assurance platform to identify a recommended software image for use by a particular entity for particular devices in a particular environment by evaluating the performance of the different available software images on similar devices within similar environments as the device to be upgraded. Such techniques may enable a user, such as a network administrator of the entity, to obtain a software image that is more suitable for the entity's particular environment than other available software images, thereby improving the reliability and seamlessness of installing or upgrading software images of devices.

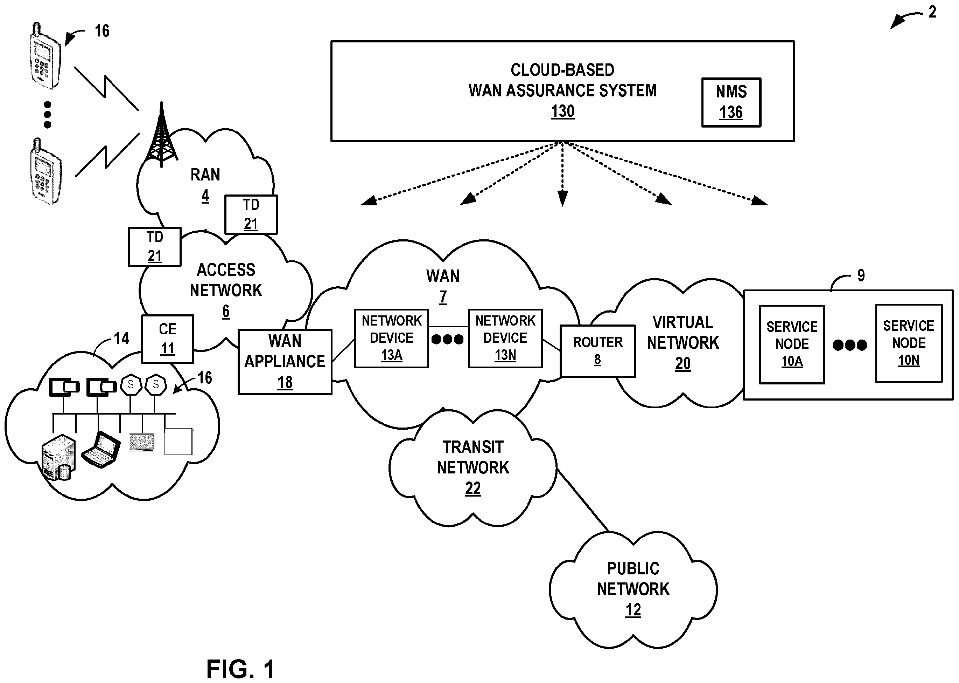

FIG. 1 is a block diagram of an example network system 2 for recommending a software image to install on a network device, such as one of network devices 13, in accordance with the techniques of the disclosure. In the illustrated example of FIG. 1, a service provider network 2 operates as a private network to provide packet-based network services to subscriber devices 16 (also referred to herein as "client devices 16," "customer devices 16," or "user devices 16"). That is, service provider network 2 provides authentication and establishment of network access for subscriber devices 16 such that a subscriber device may begin exchanging data packets with public network 12, which may be an internal or external packet-based network such as the Internet.

Service provider network 2 comprises access network 6 that provides connectivity to public network 12 via service provider wide area network 7 (hereinafter, "WAN 7") and router 8. WAN 7 and public network 12 provide packet-based services that are available for request and use by subscriber devices 16. As examples, WAN 7 and/or public network 12 may provide bulk data delivery, voice over Internet protocol (VoIP), Internet Protocol television (IPTV), Short Messaging Service (SMS), Wireless Application Protocol (WAP) service, or user-specific application services. In some examples, WAN 7 is a software-defined wide area network (SD-WAN). Public network 12 may comprise, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates access network 6, an enterprise IP network, or some combination thereof. In various examples, public network 12 is connected to a public WAN, the Internet, or to other networks. Public network 12 executes one or more packet data protocols (PDPs), such as IP (IPv4 and/or IPv6), X.25 or Point-to-Point Protocol (PPP), to enable packet-based transport of public network 12 services.

In general, subscriber devices 16 connect to gateway router 8 via access network 6 to receive connectivity to subscriber services for applications hosted by public network 12 or data center 9. A subscriber may represent, for instance, an enterprise, a residential subscriber, or a mobile subscriber. Subscriber devices 16 may be, for example, personal computers, laptop computers or other types of computing devices positioned behind customer equipment (CE) 11, which may provide local routing and switching functions for user network 14 (also referred to as "customer network 14"). Each of subscriber devices 16 may run a variety of software applications, such as word processing and other office support software, web browsing software, software to support voice calls, video games, video conferencing, and email, among others. For example, subscriber device 16 may be a variety of network-enabled devices, referred generally to as "Intemet-of-Things" (IoT) devices, such as cameras, sensors (S), televisions, appliances, etc. In addition, subscriber devices 16 may comprise mobile devices that access the data services of service provider network 2 via a radio access network (RAN) 4. Example mobile subscriber devices include mobile telephones, laptop or desktop computers having, e.g., a 3G wireless card, wireless-capable netbooks, video game devices, pagers, smart phones, personal data assistants (PDAs) or the like.

A network service provider operates, or in some cases leases, elements of access network 6 to provide packet transport between subscriber devices 16 and router 8. Access network 6 represents a network that aggregates data traffic from one or more of subscriber devices 16 for transport to/from WAN 7 of the service provider. Access network 6 includes network nodes that execute communication protocols to transport control and user data to facilitate communication between subscriber devices 16 and router 8. Access network 6 may include a broadband access network, a wireless LAN, a public switched telephone network (PSTN), a customer premises equipment (CPE) network, or other type of access network, and may include or otherwise provide connectivity for cellular access networks, such as radio access network (RAN) 4. Examples include networks conforming to a Universal Mobile Telecommunications System (UMTS) architecture, an evolution of UMTS referred to as Long Term Evolution (LTE), mobile IP standardized by the Internet Engineering Task Force (IETF), as well as other standards proposed by the 3^{rd} Generation Partnership Project (3GPP), 3^{rd} Generation Partnership Project 2 (3GGP/2) and the WiMAX forum.

A WAN appliance 18 may be a customer edge (CE) router, a provider edge (PE) router, or other network device between access network 6 and WAN 7. WAN 7 offers packet-based connectivity to subscriber devices 16 attached to access network 6 for accessing public network 12 (e.g., the Internet). WAN 7 may represent a public network that is owned and operated by a service provider to interconnect a plurality of networks, which may include access network 6. In some examples, WAN 7 may implement Multi-Protocol Label Switching (MPLS) forwarding and in such instances may be referred to as an MPLS network or MPLS backbone. In some instances, WAN 7 represents a plurality of interconnected autonomous systems, such as the Internet, that offers services from one or more service providers. WAN 7 may include network devices 13A-13N (hereinafter, "network devices 13"), including WAN appliance 18 and router 8, that forward application traffic on WAN links within WAN 7. Public network 12 may represent the Internet. Public network 12 may represent an edge network coupled to WAN 7 via a transit network 22 and one or more network devices, e.g., a CE device such as a CE switch or router. Public network 12 may include a data center. WAN appliance 8 may exchange packets with service nodes 10A-10N (hereinafter, "service nodes 10") via virtual network 20, and router 8 may forward packets to public network 12 via transit network 22.

In examples of network 2 that include a wireline/broadband access network, router 8 may represent a Broadband Network Gateway (BNG), Broadband Remote Access Server (BRAS), MPLS PE router, core router or gateway, or Cable Modem Termination System (CMTS). In examples of network 2 that include a cellular access network as access network 6, router 8 may represent a mobile gateway, for example, a Gateway General Packet Radio Service (GPRS) Serving Node (GGSN), an Access Gateway (aGW), or a Packet Data Network (PDN) Gateway (PGW). In other examples, the functionality described with respect to router 8 may be implemented in a switch, service card or another network element or component. In some examples, router 8 may itself be a service node.

A network service provider that administers at least parts of network 2 typically offers services to subscribers associated with devices, e.g., subscriber devices 16, that access service provider network 2. Services offered may include, for example, traditional Internet access, VoIP, video and multimedia services, and security services. As described above with respect to WAN 7, WAN 7 may support multiple types of access network infrastructures that connect to service provider network access gateways to provide access to the offered services. In some instances, the network system may include subscriber devices 16 that attach to multiple different access networks 6 having varying architectures.

In general, any one or more of subscriber devices 16 may request authorization and data services by sending a session request to a gateway device such as WAN appliance 18 or router 8. In turn, WAN appliance 18 may access a central server (not shown) such as an Authentication, Authorization and Accounting (AAA) server to authenticate the one of subscriber devices 16 requesting network access. Once authenticated, any of subscriber devices 16 may send subscriber data traffic toward WAN 7 to access and receive services provided by public network 12, and such packets may traverse router 8 as part of at least one packet flow. In some examples, WAN appliance 18 may forward all authenticated subscriber traffic to public network 12, and router 8 may apply services and/or steer particular subscriber traffic to a data center 9 if the subscriber traffic requires services on service nodes 10. Applications (e.g., service applications) to be applied to the subscriber traffic may be hosted on service nodes 10.

For example, when forwarding subscriber traffic, router 8 may direct individual subscriber packet flows through services executing on one or more service cards installed within data center 9. In addition, or alternatively, service provider network 2 includes a data center 9 having a cluster of service nodes 10 that provide an execution environment for the mostly virtualized network services. In some examples, each of service nodes 10 represents a service instance. Each of service nodes 10 may apply one or more services to traffic flows. As such, router 8 may steer subscriber packet flows through defined sets of services provided by service nodes 10. That is, in some examples, each subscriber packet flow may be forwarded through a particular ordered combination of services provided by service nodes 10, each ordered set being referred to herein as a "service chain." As examples, services and/or service nodes 10 may apply stateful firewall (SFW) and security services, deep packet inspection (DPI), carrier grade network address translation (CGNAT), traffic destination function (TDF) services, media (voice/video) optimization, Internet Protocol security (IPSec)/virtual private network (VPN) services, hypertext transfer protocol (HTTP) filtering, counting, accounting, charging, and/or load balancing of packet flows, or other types of services applied to network traffic.

In the example of FIG. 1, subscriber packet flows may be directed along a service chain that includes any of services applied by service nodes 10. Once processed at a terminal node of the service chain, i.e., the last service to be applied to packets flowing along a particular service path, the traffic may be directed to public network 12.

Whereas a "service chain" defines one or more services to be applied in a particular order to provide a composite service for application to packet flows bound to the service chain, a "service tunnel" or "service path" refers to a logical and/or physical path taken by packet flows processed by a service chain along with the forwarding state for forwarding packet flows according to the service chain ordering. Each service chain may be associated with a respective service tunnel, and packet flows associated with each subscriber device 16 flow along service tunnels in accordance with a service profile associated with the respective subscriber. For example, a given subscriber may be associated with a particular service profile, which in turn is mapped to a service tunnel associated with a particular service chain. Similarly, another subscriber may be associated with a different service profile, which in turn is mapped to a service tunnel associated with a different service chain. In some examples, after WAN appliance 18 has authenticated and established access sessions for the subscribers, WAN appliance 18 or router 8 may direct packet flows for the subscribers along the appropriate service tunnels, thereby causing data center 9 to apply the requisite ordered services for the given subscriber. In some examples, a centralized controller (not shown) may also provide a forwarding rule set to WAN appliance 18 or router 8 for managing the forwarding path. In some examples, the SDN controller manages the forwarding path through all elements in data center 9 starting at router 8.

In some examples, service nodes 10 may implement service chains using internally configured forwarding state that directs packets of the packet flow along the service chains for processing according to the identified set of service nodes 10. Such forwarding state may specify tunnel interfaces for tunneling between service nodes 10 using network tunnels such as IP or Generic Route Encapsulation (GRE) tunnels, Network Virtualization using GRE (NVGRE), or by using VLANs, Virtual Extensible LANs (VXLANs), MPLS techniques, and so forth. In some instances, real or virtual switches, routers or other network elements that interconnect service nodes 10 may be configured to direct the packet flow to the service nodes 10 according to service chains.

In the example of FIG. 1, service provider network 2 comprises a software defined network (SDN) and network functions virtualization (NFV) architecture. An SDN controller (not shown in FIG. 1) may provide a high-level controller device for configuring and managing the routing and switching infrastructure of service provider network 2. NFV orchestrator device (not shown in FIG. 1) may provide a high-level orchestrator for configuring and managing virtualization of network services into service nodes 10 of data center 9. In some instances, the SDN controller manages deployment of virtual machines (VMs) within the operating environment of data center 9. For example, the SDN controller may interact with provider edge (PE) router 8 to specify service chain information. For example, the service chain information provided by the SDN controller may specify any combination and ordering of services provided by service nodes 10, traffic engineering information for tunneling or otherwise transporting packet flows along service paths, rate limits, Type of Service (TOS) markings or packet classifiers that specify criteria for matching packet flows to a particular service chain. Further example details of an SDN controller are described in PCT International Patent Application PCT/US13/44378, filed June 5, 2013, the entire content of which is incorporated herein by reference.

Although illustrated as part of data center 9, service nodes 10 may be network devices coupled by one or more switches or virtual switches of WAN 7. In one example, each of service nodes 10 may run as VMs in a virtual compute environment. Moreover, the compute environment may comprise a scalable cluster of general computing devices, such as x86 processor-based servers. As another example, service nodes 10 may comprise a combination of general purpose computing devices and special purpose appliances. As virtualized network services, individual network services provided by service nodes 10 can scale just as in a modern data center through the allocation of virtualized memory, processor utilization, storage and network policies, as well as horizontally by adding additional load-balanced VMs. In other examples, service nodes 10 may be gateway devices or other routers. In further examples, the functionality described with respect to each of service nodes 10 may be implemented in a switch, service card, or another network element or component.

Cloud-based WAN assurance system 130 provides WAN assurance services to WAN 7. In some examples, cloud-based WAN assurance system 130 provides monitoring and analytics for network devices 13. Cloud-based WAN assurance system 130 includes network management system (NMS) 136 which may provide machine-learning based analytics of data collected by cloud-based WAN assurance system 130.

A typical network device 13 installs software in the form of a software image. Examples of a software image include an operating system, driver, API, firmware, or application. Multiple different types of software images may be available to install to a network device. For example, different vendors may offer their version of the software image for installation. Further, a software image may have multiple versions, releases, or builds, such as an alpha version, a beta version, a stable version, a long-term support version, an experimental version, a developmental version, a "nightly" build. Older, thoroughly tested versions of the software image may provide more stability to a user, while newer versions of the software image may provide additional features or enhanced security. An entity may desire to install a software image that provides the highest stability, latest features, and/or high security for his or her use case. However, conventionally, no mechanism exists that enables a user, such as a network administrator for the entity, to evaluate different versions of a software image to determine which software image is most suitable for use within network devices 13 of the entity. This is compounded by the fact that different entities may place more emphasis on stability, security, or new features within their network, and therefore a "one size fits all" approach may not be suitable for every entity's needs.

In accordance with the techniques described herein, NMS 136 of cloud-based WAN assurance system 130 may evaluate (or "score") different versions of a software image with respect to a profile of a particular entity. Further, NMS 136 may identify a recommended software image having a highest score for use within the entity's environment for installation by the entity upon network devices 13. The following example is described with respect to a particular network device 13. However, one or more other types of devices, such as one of router 8, user equipment 11, network devices 13, subscriber devices 16, or WAN appliance 18, may also install software images, and therefore the techniques of the disclosure are likewise applicable to other such types of devices as well, such as for an environment with many thousands of devices.

NMS 136 collects various types of information about network devices 13. For example, NMS 136 collects performance, metrics, and configuration information for network devices 13, the networks within which network devices 13, and applications executed by network devices 13. NMS 137 uses such information to build an entity profile for an entity to which network devices 13 belong, which provides insight on a user experience as well as performance, stability, feature and security requirements, the network environment, and usage of the network devices 13 of the entity.

A user may desire to select a software image for, e.g., network device 13A. NMS 136 of cloud-based WAN assurance system 130 obtains a first entity profile for a first entity associated with the user. The first entity profile may specify usage characteristics, performance requirements, historical usage behavior, or other types of information about the first entity's usage of network devices 13 within the first entity's network, and more specifically, information pertaining to network device 13A. For example, the entity profile may include historical information about device performance, network connectivity, applications performance, or model, type, or version of one or more network devices 13 of the first entity (including network device 13A).

NMS 136 determines other entities that have similar entity profiles as the first entity profile. For example, NMS 136 may identify entities having one or more network devices 13 that have one or more similar factors as, e.g., network device 13A of the first entity. Such factors considered may include, e.g., device performance, network connectivity, applications performance, or model, type, or version of the network device 13. Thus, two entities may have "similar" profiles where each entity operates devices that have one or more of: similar software versions; similar hardware; similar configurations; are located within similar network topology; similar user behavior; similar performance or performance requirements; or access similar applications.

NMS 136 obtains, for each of the network devices 13 associated with entities having a similar entity profile as the first entity, historical information for the network device 13 and identification of a software image used by the network device 13. In some examples, the historical information includes historical performance information for the network device 13, the historical performance of a network within which the network device 13 operates, and/or historical performance of one or more applications executed by the network device 13.

NMS 136 computes, based on the historical information, a software image score for one or more software images used by the network devices 13 of the other entities having similar profiles. NMS 136 identifies a software image having a highest software image score from the scored software images used by the network devices 13 of entities having similar profiles as the first entity. NMS 136 outputs, for display, an indication specifying the software image having the highest software image score as recommended for installation to the first network device 13A.

In some examples, NMS 136 may further compute a software image score for a software image currently in use by network device 13A. Thereafter, NMS 136 may display, to a user, the recommended software image, the software image score of the recommended software image, the software image currently in use by network device 13A, and the software image score of the software image currently in use by network device 13A. In some examples, NMS 136 may provide a breakdown of the software image scores in multiple categories, such as with respect to device performance, network performance, and/or application performance. In this fashion, NMS 136 may identify and present, to the user, the specific advantages projected to be gained (such as improvements in performance, stability, features, and/or security, etc.) by installing the recommended software image upon network device 13A so as to assist a network administrator in the decision of whether to upgrade one or more network devices 13 within the network managed by the network administrator.

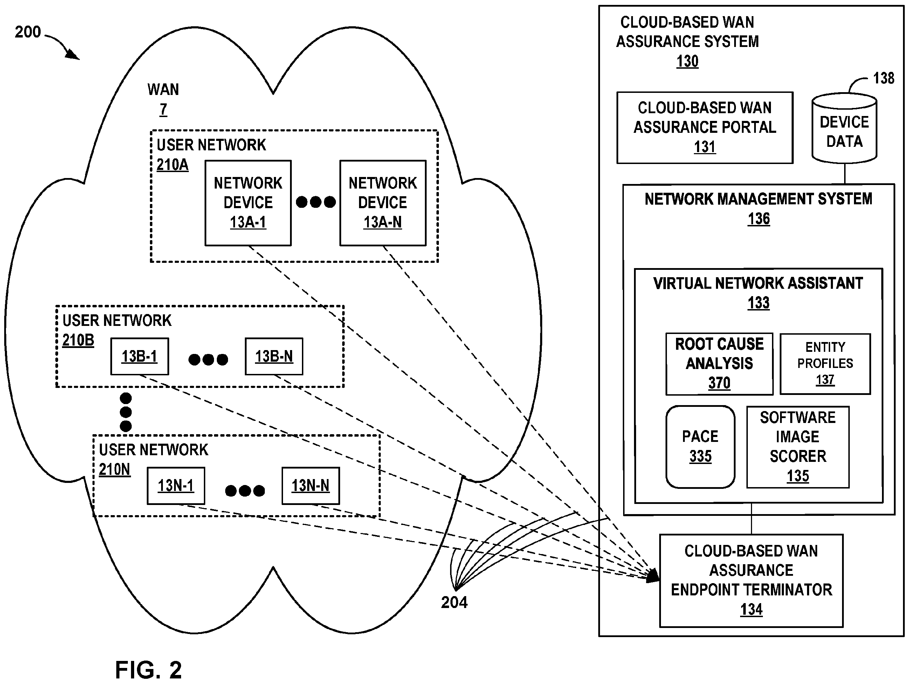

FIG. 2 is a block diagram illustrating an example computer network system 200 configured to recommend a software image for installation upon network devices of an entity, such as one or more network devices 13, in accordance with the techniques of the disclosure. Cloud-based WAN assurance system 130 is a cloud-based microservices system. In some examples, each of network devices 13 is an example of one of network devices 13 of FIG. 1 and cloud-based WAN assurance system 130 is an example of cloud-based WAN assurance system 130 of FIG. 1.

In the example of FIG. 2, WAN 7 includes a plurality of user networks 210A-210N (hereinafter, "user networks 210"). Each user network 210 includes network devices 13A-13N (hereinafter, "network devices 13"). For example, user network 210A includes network devices 13A-1 to 13A-N, user network 210B includes network devices 13B-1 to 13B-N, and user network 210N includes network devices 13N-1 to 13N-N. Each user network 210 may have a different network topology and a different amount or type of network devices 13 than each other user network 210. Furthermore, user networks 210 may have varying purposes and behavior, and may be as commercial, enterprise, or residential networks.

Cloud-based WAN assurance system 130 provides a cloud service that brings automated operations and service levels to the enterprise access layer for the WAN edge, and when used in conjunction with Wired and Wireless Assurance, transforms all operations covering the switches, IoT devices, access points, servers, printers, etc. Gateways provide rich streaming telemetry data that enable the insights for gateway health metrics and anomaly detection. Network devices 13 provide streaming data to cloud-based WAN assurance system 130, which may include telemetry data, SLE metrics, and/or traffic metrics including application usage data, and health information, etc.

In some examples, the streamed data includes data relating to application response times and WAN link and gateway health measurements. For Gateway health, data can include, for example, CPU utilization, memory utilization, link utilization, temperature, fan, power. For WAN link health, data can include, for example, IPSec information, Routing Protocols information, and WAN interface information. Application experience information can include, for example, latency, jitter, packet loss, roundtrip times, and other metrics, on a per-application basis.

WAN insights driven by AI: For physical network devices, the WAN insights show exactly how network devices are performing with detailed network device metrics and insights down to the port level such as CPU, memory utilization, bytes transferred, traffic utilization, and power draw. WAN Assurance also logs network device events, like configuration changes and system alerts. Along with WAN utilization, IPSec utilization insights and Secure Vector Routing (SVR) utilization insights can help understand the amount of traffic sent over IPSec tunnels versus local breakout, where IPSec tunnels or SVR session-based routing are in use, respectively. WAN insights also provide application visibility on a per user as well as per app basis. In combination with the tenant information and session-aware router capabilities described above, WAN insights can provide application visibility on a per tenant, per application basis.

In operation, NMS 136 observes, collects and/or receives event data, which may take the form of data extracted from messages, counters and statistics, for example. NMS 136 may comprise one or more computing devices, dedicated servers, virtual machines, containers, services or other forms of environments for performing the techniques described herein. Similarly, computational resources and components implementing virtual network assistant (VNA) 133 and proactive analytics and correlations engine (PACE) 135 may be part of the NMS 136, may execute on other servers or execution environments, or may be distributed to nodes within a network (e.g., routers, switches, controllers, gateways and the like).

To ensure a high Service Level Experience (SLE), NMS 136 employs methods to detect faults in real-time and to detect faults predictively before a user notices the fault(s). These methods may also be used for ensuring a particular level of application quality of experience (AppQoE).

Example fault detection systems having aspects that may be employed by NMS 136 are described in U.S. Patent No. 10,958,585, entitled "METHODS AND APPARATUS FOR FACILITATING FAULT DETECTION AND/OR PREDICTIVE FAULT DETECTION," issued on March 23, 2021; U.S. Patent No. 9,832,082, entitled "MONITORING WIRELESS ACCESS POINT EVENTS," issued on November 28, 2017; U.S. Patent No. 10,958,537, entitled "METHOD FOR SPATIO-TEMPORAL MONITORING," issued on March 23, 2021; and U.S. Patent No. 10,985,969, entitled "SYSTEMS AND METHODS FOR A VIRTUAL NETWORK ASSISTANT," issued on April 20, 2021, the entire contents of each of which are incorporated by reference herein.

In some examples, VNA 133 of NMS 136 may apply machine learning techniques to identify the root cause of error conditions detected or predicted from the streams of event data. If the root cause may be automatically resolved, VNA 133 invokes one or more corrective actions to correct the root cause of the error condition, thus automatically improving the underlying SLE metrics and also automatically improving the user experience. Further example details of root cause analysis and automatic correction techniques that may be performed by NMS 136 are described in U.S. Patent Application No. 17/303,222, entitled "VIRTUAL NETWORK ASSISTANT HAVING PROACTIVE ANALYTICS AND CORRELATION ENGINE USING UNSUPERVISED ML MODEL," filed May 24, 2021, 2021, the entire contents of which are incorporated by reference herein.

Although the techniques of the present disclosure are described in this example as performed by NMS 136 of cloud-based WAN assurance system 130, techniques described herein may be performed by any other computing device(s), system(s), and/or server(s), including for purposes other than WAN assurance, and this disclosure is not limited in this respect. For example, one or more computing device(s) configured to execute the functionality of the techniques of this disclosure may reside in a dedicated server or be included in any other server in addition to or other than cloud-based WAN assurance system 130, or may be distributed throughout network system 200, and may or may not form a part of cloud-based WAN assurance system 130.

In some examples, network devices 13 (e.g., routers or switches) or even access points (not shown) may be configured to locally construct, train, apply and retrain unsupervised ML model(s) based on locally collected SLE metrics to determine whether the collected network event data should be discarded or whether the data represents anomalous behavior that needs to be forwarded to NMS 136 for further root cause analysis by a virtual network assistant (FIG. 2) to facilitate identification and resolution of faults.

In accordance with the techniques described herein, NMS 136 of cloud-based WAN assurance system 130 may evaluate (or "score") different versions of a software image with respect to a profile of a particular entity operating a user network, a customer network, or a datacenter tenant network. Further, NMS 136 may identify a recommended software image having a highest score for use within the entity's environment for installation upon one or more network devices 13.

For example, network devices 13 of user networks 210 provide various types of information 204 to cloud-based WAN assurance endpoint terminator 134, which in turn provides such information to NMS 136. Such information 204 may include performance, metrics, and configuration information for network devices 13, the networks within which network devices 13, and applications executed by network devices 13. For example, each network device 13 may provide information about device performance, network connectivity, applications performance, a model, type, version, of the network device 13 and identification of a software image used by the network device 13. VNA 133 of NMS 136 collects such information 204 and builds entity profiles 137 for each entity within WAN 7. The entity profile provides insight on a user experience of the entity as well as performance, stability, feature and security requirements, the network environment, and usage of the network devices 13 of the entity.

A user managing user network 210A may desire to select a software image for, e.g., network device 13A-1. In this example, as a software image, network device 13A-1 is currently using version 1.0 of a particular type of firmware. VNA 136 obtains a first entity profile of entity profiles 137 for a first entity associated with network device 13A-1. The first entity profile may specify usage characteristics, performance requirements, historical usage behavior, or other types of information about the first entity's usage of network devices 13A-1-13A-N within user network 210A, and more specifically, information pertaining to network device 13A-1. For example, the entity profile may include historical information about device performance, network connectivity, applications performance, or model, type, or version of network device 13A-1.

VNA 133 determines other entities that have similar entity profiles as the first entity profile. For example, VNA 133 may identify a second entity operating user network 210B as having network devices 13B-1, 13B-2, and 13B-3 and a third entity operating user network 210N as having network devices 13N-1, 13N-2, and 13N-3 that each have one or more similar factors as network device 13A-1 of the first entity. Such factors considered may include, e.g., device performance, network connectivity, applications performance, or model, type, or version of the respective network device 13. Device performance may be measured based on one or more metrics about a network device 13, such as a power usage, temperature, memory usage, or CPU usage. Network connectivity may be measured based on one or more metrics about the network to which the network device 13 is connected, such as a historical uptime and/or downtime, packet loss, jitter, bandwidth, etc. Applications performance may be measured based on one or more metrics about one or more applications executed by the network device 13, such as a jitter, loss, or latency of network traffic associated with the application or information about one or more applications services for the application.

In some examples, "similar entity profiles" refers to two entities that each have a network device 13 that has at least one of the foregoing factors that are the same or that are within a similar range. For example, the first entity and the second entity may have similar profiles where both network device 13A-1 of user network 210A and network device 13B-1 of user network 210B have a like manufacturer and model. As another example, the first entity and the second entity may have similar profiles where both network device 13A-1 of user network 210A and network device 13B-1 of user network 210B have a historical network connectivity within a predetermined range (e.g., less than 1% downtime, between 1% and 5% downtime, greater than 75% downtime, etc.). The precise criteria with which two entity profiles may be determined to be similar may be configurable by an administrator of NMS 136.

VNA 133 obtains, for each of the network devices 13 associated with entities having a similar entity profile as the first entity, historical information for the network device 13. In some examples, the historical information includes historical performance information for the network device 13, the historical performance of a network within which the network device 13 operates, and/or historical performance of one or more applications executed by the network device 13. VNA 133 further obtains identification of a software image used by the network devices associated with entities having a similar entity profile as the first entity.

In some examples, the historical performance information includes, for each network device 13, a historical device health, including metrics for one or more of a power supply, a memory, a temperature, and a CPU of the network device 13. In some examples, the historical performance information for the network includes a historical network health, including metrics for one or more of a network, an interface, or an Internet Services Provider (ISP) reachability of a WAN link of the network. In some examples, the historical performance information for the one or more applications include metrics for one or more of a jitter, a loss, or a latency of network traffic associated with each application, or information regarding one or more application services for each application.

With respect to the foregoing example, VNA 133 obtains historical information for network devices 13B-1, 13B-2, and 13B-3 of user network 210B and network devices 13N-1, 13N-2, and 13N-3 of user network 210N. For ease of discussion, in this example, the historical performance of network devices 13B-1, 13B-2, and 13B-3 of user network 210B is poor, while the historical performance of network devices 13N-1, 13N-2, and 13N-3 of user network 210N is excellent.

VNA 133 further obtains identification of a software image used by network devices 13B-1, 13B-2, and 13B-3 of user network 210B and network devices 13N-1, 13N-2, and 13N-3 of user network 210N. Furthermore, as a software image, network devices 13B-1, 13B-2, and 13B-3 of user network 210B use version 1.2 of the firmware (e.g., the most recent version of the firmware used by network device 13A-1). In contrast, as a software image, network devices 13N-1, 13N-2, and 13N-3 of user network 210N use version 1.1 of the firmware (e.g., a more recent version of the firmware used by network device 13A-1 but a less recent version of the firmware used by network devices 13B-1, 13B-2, and 13B-3).

Software image scorer 135 of VNA 133 computes, based on the historical information, a software image score for one or more software images used by the network devices 13 of the other entities having similar profiles. In some examples, software image scorer 135 averages values for multiple factors to obtain the software image score. In some examples, software image scorer 135 applies different weights to different factors to obtain the software image score. In some examples, an administrator may configure the weight of each factor in the calculation of the software image score. In other examples, software image scorer 135 may apply machine learning to generate the weights of each factor used in computing the software image score.

With respect to the foregoing example, software image scorer 135 may compute a relatively low software image score for version 1.2 of the firmware based on the poor historical performance of network devices 13B-1, 13B-2, and 13B-3 of user network 210B. In contrast, software image scorer 135 may compute a relatively high software image score for version 1.1 of the firmware based on the excellent historical performance of network devices 13N-1, 13N-2, and 13N-3 of user network 210N.

VNA 133 identifies a software image having a highest software image score from the scored software images used by the network devices 13 of entities having similar profiles as the first entity. VNA 133 outputs, for display, an indication specifying the software image having the highest software image score as recommended for installation to network device 13A-1. With respect to the foregoing example, VNA 133 identifies version 1.1 of the firmware as having the highest software image score, and displays a recommendation to a user that the user should use version 1.1 of the firmware for upgrading network device 13A-1 within a network of the first entity.

In some examples, software image scorer 135 may further compute a software image score for a software image currently in use by network device 13A. Thereafter, VNA 133 may display, to a user, the recommended software image, the software image score of the recommended software image, the software image currently in use by the network device 13, and the software image score of the software image currently in use by network device 13. In some examples, VNA 133 may provide a breakdown of the software image scores in multiple categories, such as with respect to device performance, network performance, and/or application performance. In this fashion, VNA 133 may identify and present, to the user, the specific advantages projected to be gained (such as improvements in performance, stability, features, and/or security, etc.) by installing the recommended software image upon the network device 13 so as to assist the user, such as a network administrator, in the decision of whether to upgrade one or more network devices 13 within the network of the entity.

For example, with respect to the foregoing example, software image scorer 135 may further compute a software image score for version 1.0 of the firmware in use by network device 13A-1. VNA 133 displays, to a user, a recommendation to install version 1.1 of the firmware upon network device 13A-1, the software image score of version 1.1 of the firmware, an indication that network device 13A-1 currently uses version 1.0 of the firmware, and a software image score of version 1.0 of the firmware. VNA 133 further displays, for example, a breakdown of the software image scores of versions 1.0 and 1.1 of the firmware. In this example, VNA 133 may provide an indication that, e.g., a device performance, a network connectivity, or an application performance may be improved by upgrading network device 13A-1 from version 1.0 to version 1.1 of the firmware.

In the foregoing example, VNA 133 identifies version 1.1 of the firmware as having the highest software image score, and recommends that the user should use version 1.1 of the firmware for upgrading network device 13A-1. Notably, VNA 133 recommends the use of version 1.1 of the firmware even though a more recent version of the firmware (e.g., version 1.2 of the firmware) exists. Conventionally, it is often recommended to use a latest or most recent version of a particular software image purely because such version is most recent. In contrast, the techniques of the disclosure enable VNA 133 to identify a software image that is most suitable to the specific use case of a particular entity, here, the first entity operating user network 210A and who requires a software image for a specific device under specific conditions, e.g., network device 13A-1. It should be recognized that VNA 133 recommends a particular software image as most suitable for a specific entity. Therefore, it follows that in other examples, VNA 133 may instead recommend the use of a different software image for, e.g., installation upon a network device of a fourth entity who has different usage or performance requirements than the first entity. Therefore, the techniques of the disclosure allow VNA 133 to recommend the use of a specific software image best tailored to suit the particular needs of an individual entity for an specific device under specific conditions.

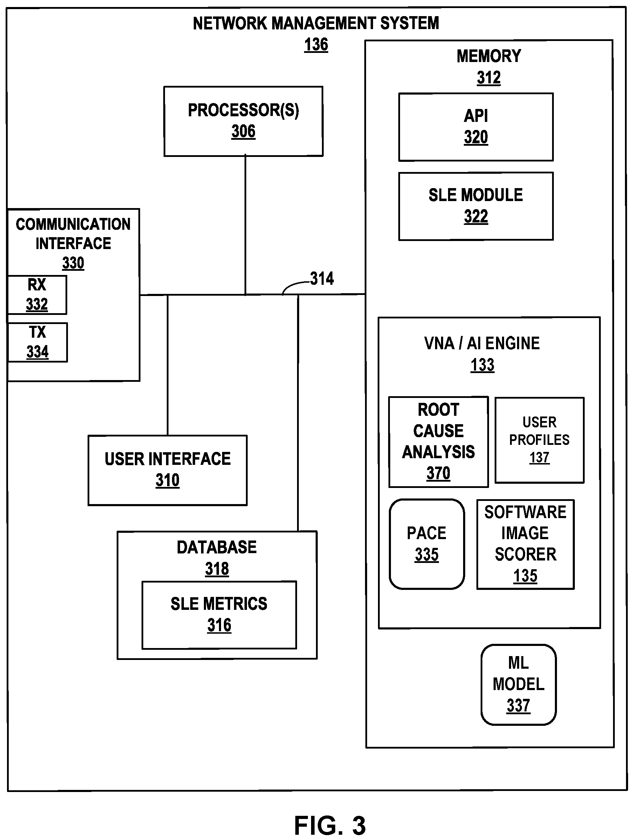

FIG. 3 is a block diagram illustrating example network management system (NMS) 136 configured in accordance with one or more techniques of this disclosure. NMS 136 may be used to implement, for example, NMS 136 in FIG. 1 or NMS 136 in FIG. 2. In such examples, NMS 136 is responsible for monitoring and management of one or more of network devices 13 of FIG. 1 or network devices 13 of FIG. 2. In this example, NMS 136 receives data collected from network devices 13 by cloud-based WAN assurance endpoint terminator 134, such as telemetry data, SLE metrics, and/or traffic metrics including application usage data, and health information, and analyzes the data for cloud-based WAN assurance of a network containing network devices 13. In some examples, NMS 136 may be part of another server shown in FIG. 1 or a part of any other server.

In some examples, in addition to monitoring network devices 13, NMS 136 is also responsible for monitoring and management of one or more wireless networks (not shown), in addition to monitoring network devices of service provider or other networks. In this example, NMS 136 also receives data collected by access points from user equipment, such as data used to calculate one or more SLE metrics, and analyzes this data for cloud-based management of the wireless networks. In this manner, a single NMS 136 can be used for management of both network devices 13, which may include virtualized network devices (e.g., software-based routers executing on a virtual machine or container), and wireless networks, for an end-to-end WAN assurance system viewable via a single cloud-based WAN assurance portal.

NMS 136 includes a communications interface 330, one or more processor(s) 306, a user interface 310, a memory 312, and a database 318. The various elements are coupled together via a bus 314 over which the various elements may exchange data and information.

Processor(s) 306 execute software instructions, such as those used to define a software or computer program, stored to and./or received via computer-readable medium. Such a computer-readable medium may be a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such a computer-readable medium may be a computer-readable transmission medium, such as a carrier wave or transmission signal received over a communications interface. A computer-readable transmission medium may occur between components of a computer system (such as a bus conveying instructions from a memory (e.g. memory 312) to processor (e.g. processor 306) and/or may occur between plural separate computer systems (such as a computer network conveying instructions).

Communications interface 330 may include, for example, an Ethernet interface. Communications interface 330 couples NMS 136 to a network and/or the Internet, such as any of network(s) 4, 6, 7, 11, 12, 20, and 22, as shown in FIG. 1, and/or any wide area networks or local area networks. Communications interface 330 includes a receiver 332 and a transmitter 334 by which NMS 136 receives/transmits data and information to/from any of network devices 13 and/or any other devices or systems forming part of WAN 7 such as shown in FIG. 1. The data and information received by NMS 136 may include, for example, SLE-related or event log data received from network devices 13 and used by NMS 136 to remotely monitor the performance of network devices 13 and WAN 7. In some examples, NMS 136 may further transmit data via communications interface 330 to any of network devices 13 to remotely manage WAN 7.

Memory 312 includes one or more devices configured to store programming modules and/or data associated with operation of NMS 136. For example, memory 312 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 220, an SLE module 322, a virtual network assistant (VNA)/AI engine 133, a root cause analysis module 370, and upgrade planning unit 135. NMS 136 may also include any other programmed modules, software engines and/or interfaces configured for remote monitoring and management of network devices 13, including remote monitoring and management of any of network devices 13. NMS 136 may also include any other programmed modules, software engines and/or interfaces configured for remote monitoring and management of wireless networks, including remote monitoring and management of any of access points.

SLE module 322 enables set up and tracking of thresholds for SLE metrics for each network 102. SLE module 322 further analyzes SLE-related data collected by network devices 13. For example, cloud-based WAN assurance endpoint terminator(s) 134 collect SLE-related data from network devices 13 currently connected to WAN 7. This data is transmitted to NMS 136, which executes by SLE module 322 to determine one or more SLE metrics for each of network devices 13 that have been onboarded to cloud-based WAN assurance system 130. The SLE metrics track whether the service level meets the configured threshold values for each SLE metric. Each metric may further include one or more classifiers. If a metric does not meet the SLE threshold, the failure may be attributed to one of the classifiers to further determine where the failure occurred. SLE metrics may include, for example, packet loss, jitter, latency, end-to-end processing time, and other user/device experience metrics such as WAN Link Health, Application Experience, and Gateway health.

VNA/AI engine 133 analyzes data received from network devices 13 as well as its own data to identify when undesired to abnormal states are encountered within WAN 7, such as within network devices 13. For example, VNA/AI engine 133 may use root cause analysis module 370 to identify the root cause of any undesired or abnormal states. In some examples, root cause analysis module 370 utilizes artificial intelligence-based techniques to help identify the root cause of any poor SLE metric(s) occurring within WAN 7. In addition, VNA/AI engine 133 may automatically invoke one or more corrective actions intended to address the identified root cause(s) of one or more poor SLE metrics. Examples of corrective actions that may be automatically invoked by VNA/AI engine 133 may include, but are not limited to, invoking API 320 to reboot one or more network devices 13. The corrective actions may further include restarting a switch and/or a router, invoke downloading of new software to a network device, switch, or router, etc. These corrective actions are given for example purposes only, and the disclosure is not limited in this respect. If automatic corrective actions are not available or do not adequately resolve the root cause, VNA/AI engine 133 may proactively provide a notification including recommended corrective actions to be taken by IT personnel to address the network error.

PACE 335 of the virtual network assistant may, in some examples, dynamically construct, train, apply and retrain unsupervised ML model(s) 337 to event data (SLE metrics 316) to determine whether the collected network event data represents anomalous behavior that needs to be further analyzed by root cause analysis module 370 of VNA/AI engine 133 to facilitate identification and resolution of faults.

PACE 335 may then apply the ML model to data streams and/or logs of newly collected data of various network event types (e.g., statistics, messages, SLE metrics or the like, herein referred to as "PACE" event data of event type) to detect whether the currently observed network event data with the stream of incoming data is indicative of a normal operation of the system or whether the incoming network event data is indicative of a non-typical system behavior event or trend corresponding to a malfunctioning network that requires mitigation.

When the application of the ML model by the proactive analytics and correlation engine to the network event data indicates that mitigation is required, NMS 136 may invoke a more complex root cause network analytics component of the virtual network assistant (VNA) to identify a root cause of the anomalous system behavior and, if possible, trigger automated or semi-automated corrective action. In this way, PACE 335 may construct and apply a ML model based on the particular complex network in which PACE 335 is deployed to determine whether to perform further, resource-intensive analysis on incoming streams of network event data collected (e.g., in real-time) from elements within the complex network system.

Further, along with identifying which issues require attention, some examples described herein may be configured to monitor messages exchanged within the complex network system as well as numerous operational counters, and statistics. During normal operation, the ratios between the values of different counters and statistics can assume values within a specific range of acceptable values, referred to herein as {Min, Max} range.

In accordance with the techniques described herein, VNA 133 may evaluate (or "score") different versions of a software image with respect to a profile of a particular entity. Further, VNA 133 may indicate a recommended software image having a highest score for use within the entity's environment for installation by a user upon a network device 13.

For example, VNA 133 of NMS 136 collects performance, metrics, and configuration information for network devices 13 of FIG. 1 and builds entity profiles 137 for each entity within WAN 7. The entity profile provides insight on a user experience of the entity as well as performance, stability, feature and security requirements, the network environment, and usage of the network devices 13 of the entity.

A user, such as a network administrator of a first entity, may desire to select a software image for installation upon a first network device 13. VNA 136 obtains a first entity profile of entity profiles 137 for the first entity. The first entity profile may specify usage characteristics, performance requirements, historical usage behavior, or other types of information about the first entity's usage of the first network device. For example, the first entity profile may include historical information about device performance, network connectivity, applications performance, or model, type, or version of the first network device 13.

VNA 133 determines other entities that have similar entity profiles as the first entity profile. Such factors considered may include, e.g., device performance, network connectivity, applications performance, or model, type, or version of the respective network device 13. VNA 133 obtains, for each of the network devices 13 associated with entities having a similar entity profile as the first entity, historical information for the network device 13. In some examples, the historical information includes historical performance information for the network device 13, the historical performance of a network within which the network device 13 operates, and/or historical performance of one or more applications executed by the network device 13. VNA 133 further obtains identification of a software image used by the network devices associated with entities having a similar entity profile as the first entity.

Software image scorer 135 of VNA 133 computes, based on the historical information, a software image score for one or more software images used by the network devices 13 of the other entities having similar profiles. VNA 133 identifies a software image having a highest software image score from the scored software images used by the network devices 13 of entities having similar profiles as the first entity. VNA 133 outputs, for display, an indication specifying the software image having the highest software image score as recommended for installation to the first network device 13 of the first entity.

In some examples, software image scorer 135 may further compute a software image score for a software image currently in use by the first network device 13. Thereafter, VNA 133 may display, to a user, the recommended software image, the software image score of the recommended software image, the software image currently in use by the first network device 13, and the software image score of the software image currently in use by the first network device 13. In some examples, VNA 133 may provide a breakdown of the software image scores in multiple categories, such as with respect to device performance, network performance, and/or application performance. In this fashion, VNA 133 may identify and present, to a user, the specific advantages projected to be gained (such as improvements in performance, stability, features, and/or security, etc.) by installing the recommended software image upon the first network device 13 so as to assist the user, such as a network administrator, in the decision of whether to upgrade one or more network devices 13 within the network of the entity.

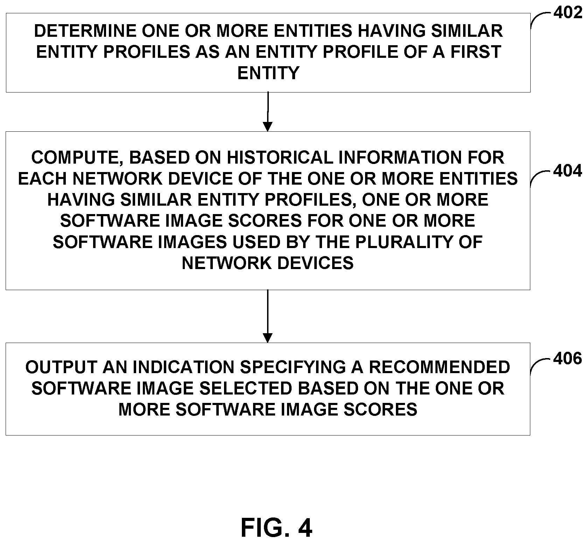

FIG. 4 is a flowchart illustrating an example operation in accordance with the techniques of the disclosure. Specifically, FIG. 4 depicts an example operation for recommending a software image for installation upon a device of an entity. FIG. 4 is described with respect to FIG. 1 for convenience. However, the operation of FIG. 4 may be implemented using cloud-based WAN assurance system 130 of FIG. 2 or NMS 136 of FIG. 3.

As depicted in the example of FIG. 4, a user, such as a network administrator of a first entity, may desire to select a software image for, e.g., network device 13A. NMS 136 of cloud-based WAN assurance system 130 obtains a first entity profile for the first entity. The first entity profile may specify usage characteristics, performance requirements, historical usage behavior, or other types of information about the first entity's usage of network devices 13 within the first entity's network, and more specifically, information pertaining to network device 13A. For example, the entity profile may include historical information about device performance, network connectivity, applications performance, or model, type, or version of one or more network devices 13 of the first entity (including network device 13A).

NMS 136 determines one or more other entities that have similar entity profiles as the first entity profile of the first entity (402). For example, NMS 136 may identify entities having one or more network devices 13 that have one or more similar factors as, e.g., network device 13A of the first entity. Such factors considered may include, e.g., device performance, network connectivity, applications performance, or model, type, or version of the network device 13.

NMS 136 obtains historical information for each of the network devices 13 of the one or more entities having a similar entity profile as the first entity profile of the first entity. In some examples, the historical information includes historical performance information for the network device 13, the historical performance of a network within which the network device 13 operates, and/or historical performance of one or more applications executed by the network device 13. NMS 136 further obtains an identification of a software image used by each of the network devices 13 associated with entities having a similar entity profile as the first entity.

NMS 136 computes, based on the historical information, one or more software image scores for one or more software images used by the network devices 13 of the one or more entities having similar profiles as the first entity profile of the first entity (404). NMS 136 identifies a software image having a highest software image score from the scored software images used by the network devices 13 of entities having similar profiles as the first entity. NMS 136 outputs, for display, an indication specifying a recommended software image for the first network device 13A, the recommended software image selected based on the one or more software image scores for the one or more software images used by the plurality of network devices 13 of the one or more entities having similar profiles as the first entity profile of the first entity (406).

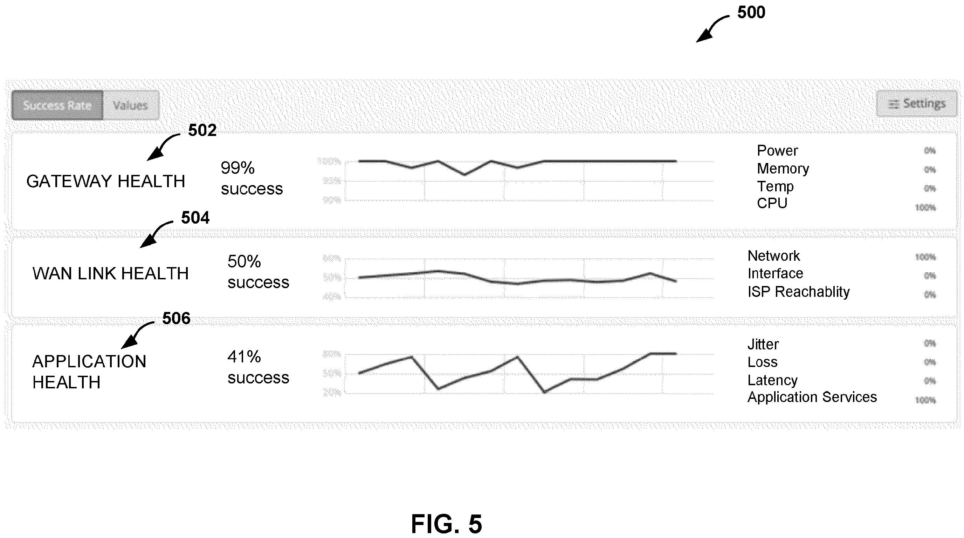

FIG. 5 is an illustration depicting an example user interface 500 for displaying historical performance information that may be output by cloud-based WAN assurance platform 130 to recommend a software image, in accordance with the techniques of the disclosure. Historical information 500 includes historical information of a network device 16 of FIG. 1, and may include historical gateway health 502, historical WAN link health 504, and historical application health 506. In some examples

Historical gateway health 502 includes historical information about a health of a gateway. In the example of FIG. 5, the gateway is an example of a network device 16 of FIG. 1. Such historical gateway health 502 information may include information regarding a power supply, a memory, a temperature, and a CPU of a gateway.

Historical WAN link health 504 includes historical information about a health of a WAN link to which a network device 16 (e.g., the gateway) is connected. Such historical WAN link health 504 information may include information regarding a network, an interface, and an ISP reachability of the WAN link.

Historical application health 506 includes historical information about a health of an application executed by the network device 16 (e.g., the gateway). Such historical application health 506 may include information regarding a jitter, a loss, or a latency of network traffic associated with the application, or information regarding one or more application services for the application.

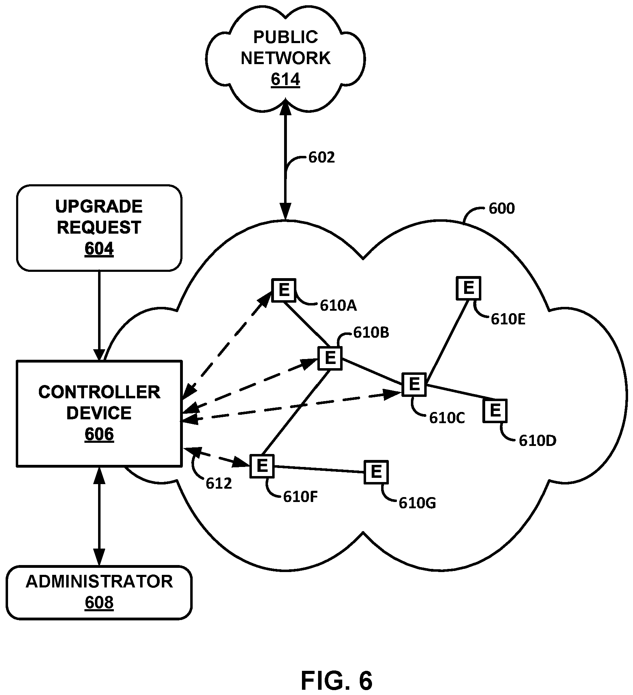

FIG. 6 is a block diagram illustrating an example including elements of an enterprise network 600 that are managed using a controller device 606, in accordance with one or more techniques of this disclosure. Managed elements 610A-610G (collectively, "elements 610") of enterprise network 600 include network devices interconnected via communication links to form a communication topology to exchange resources and information. Elements 610 (also generally referred to as network devices or remote network devices) may include, for example, routers, switches, gateways, bridges, hubs, servers, firewalls or other intrusion detection systems (IDS) or intrusion prevention systems (IDP), computing devices, computing terminals, printers, other network devices, or a combination of such devices. In some examples, elements 610 are examples of devices 8, 11, 13, 16, or 18 of FIG. 1. In some examples, controller device 606 is an example of a network system, such as NMS 136 of cloud-based WAN assurance system 130 of FIG. 1.

While described in this disclosure as transmitting, conveying, or otherwise supporting packets, enterprise network 600 may transmit data according to any other discrete data unit defined by any other protocol, such as a cell defined by the Asynchronous Transfer Mode (ATM) protocol, or a datagram defined by the User Datagram Protocol (UDP). Communication links interconnecting elements 610 may be physical links (e.g., optical, copper, and the like), wireless, or any combination thereof. Enterprise network 600 may include many more elements 610 than shown in FIG. 1.

Enterprise network 600 is shown coupled to public network 614 (e.g., the Internet) via communication link 602. Public network 614 may include, for example, one or more client computing devices. Public network 614 may provide access to web servers, application servers, public databases, media servers, end-user devices, and other types of network resource devices and content. Although described for purposes of example with respect to an enterprise service network, the techniques of this disclosure are applicable to other types of networks, such as a branch network, a data center network, a service provider network, an Internet Service Provider network, or other type of network.

Controller device 606 is communicatively coupled to elements 610 via enterprise network 600. Controller device 606, in some examples, forms part of a device management system, although only one device of the device management system is illustrated for purpose of example in FIG. 1. Controller device 606 may be coupled either directly or indirectly to the various elements 610. Once elements 610 are deployed and activated, administrator 608 uses controller device 606 to manage the network devices using a device management protocol. One example device protocol is the Simple Network Management Protocol (SNMP) that allows controller device 606 to traverse and modify management information bases (MIBs) that store configuration data within each of managed elements 610.

In common practice, controller device 606, also referred to as a network management system (NMS) or NMS device, and elements 610 are centrally maintained by an Information Technology (IT) group of the enterprise. Administrator 608 interacts with controller device 606 to remotely monitor and configure elements 610. For example, administrator 608 may receive alerts from controller device 606 regarding any of elements 610, view configuration data of elements 610, modify the configurations data of elements 610, add new network devices to enterprise network 600, remove existing network devices from enterprise network 600, or otherwise manipulate the enterprise network 600 and network devices therein. Although described with respect to an enterprise network, the techniques of this disclosure are applicable to other network types, public and private, including LANs, VLANs, VPNs, and the like.

In some examples, administrator 608 uses controller device 606 or a local workstation to interact directly with elements 610, e.g., through telnet, secure shell (SSH), or other such communication sessions. That is, elements 610 generally provide interfaces for direct interaction, such as command line interfaces (CLIs), web-based interfaces, graphical user interfaces (GUIs), or the like, by which a user can interact with the devices to directly issue text-based commands. For example, these interfaces typically allow a user to interact directly with the device, e.g., through a telnet, secure shell (SSH), hypertext transfer protocol (HTTP), or other network session, to enter text in accordance with a defined syntax to submit commands to the managed element. In some examples, the user initiates an SSH session 612 with one of elements 610, e.g., element 610F, using controller device 606, to directly configure element 610F. In this manner, a user can provide commands in a format for execution directly to elements 610.

Further, administrator 608 can also create scripts that can be submitted by controller device 606 to any or all of elements 610. For example, in addition to a CLI interface, elements 610 also provide interfaces for receiving scripts that specify the commands in accordance with a scripting language. In a sense, the scripts may be output by controller device 606 to automatically invoke corresponding remote procedure calls (RPCs) on the managed elements 610. The scripts may conform to, e.g., extensible markup language (XML) or another data description language.

Administrator 608 uses controller device 606 to configure elements 610 to specify certain operational characteristics that further the objectives of administrator 608. For example, administrator 608 may specify, for an element 610, a particular operational policy regarding security, device accessibility, traffic engineering, quality of service (QoS), network address translation (NAT), packet filtering, packet forwarding, rate limiting, or other policies. Controller device 606 uses one or more network management protocols designed for management of configuration data within managed network elements 610, such as the SNMP protocol or the Network Configuration Protocol (NETCONF) protocol or a derivative thereof, such as the Juniper Device Management Interface, to perform the configuration. In general, NETCONF provides mechanisms for configuring network devices and uses an Extensible Markup Language (XML)-based data encoding for configuration data, which may include policy data. NETCONF is described in Enns, "NETCONF Configuration Protocol," Network Working Group, RFC 4741, Dec. 2006, available at tools.ietf.org/html/rfc4741. Controller device 606 may establish NETCONF sessions with one or more of elements 610.

Controller device 606 may be configured to accept high-level configuration data, or intents, from administrator 608 (which may be expressed as structured input parameters, e.g., according to the Yet Another Next Generation (YANG) language, which is described in Bjorklund, "YANG-A Data Modeling Language for the Network Configuration Protocol (NETCONF)," Internet Engineering Task Force, RFC 6020, Oct. 2010, available at tools.ietf.org/html/rfc6020). Controller device 606 may also be configured to output respective sets of low-level device configuration data, e.g., device configuration additions, modifications, and removals.

In some examples, controller device 606 may use YANG modeling for an intent data model and low-level device configuration models. This data may contain relations across YANG entities, such as list items and containers. In some examples, controller device 606 may convert a YANG data model into a database model, and convert YANG validations into data validations.

Controller device 606 may receive data from administrator 608 representing any or all of create, update, and/or delete actions with respect to the intent data model. Controller device 606 may be configured to use the same compilation logic for each of create, update, and delete as applied to the graph model.

In accordance with the techniques of the disclosure, a user, such as a network administrator of a first entity, may desire to select a software image for, e.g., element 610A. Controller device 606 obtains a first entity profile for the first entity. The first entity profile may specify usage characteristics, performance requirements, historical usage behavior, or other types of information about the first entity's usage of element 610A. For example, the entity profile may include historical information about device performance, network connectivity, applications performance, or model, type, or version of element 610A.

Controller device 606 determines other entities that have similar entity profiles as the first entity profile. For example, controller device 606 may identify entities having one or more elements 610 that have one or more similar factors as, e.g., element 610A of the first entity. Such factors considered may include, e.g., device performance, network connectivity, applications performance, or model, type, or version of the respective element 610.

Controller device 606 obtains, for each of the elements 610 associated with entities having a similar entity profile as the first entity, historical information for the respective element 610. In some examples, the historical information includes historical performance information for the respective element 610, the historical performance of a network within which the respective element 610 operates, and/or historical performance of one or more applications executed by the respective element 610. Controller device 606 further obtains an identification of a software image used by each of the elements 610 associated with entities having a similar entity profile as the first entity.

Controller device 606 computes, based on the historical information, a software image score for one or more software images used by the elements 610 of the other entities having similar profiles. Controller device 606 identifies a software image having a highest software image score from the scored software images used by the elements 610 of entities having similar profiles as the first entity. Controller device 606 outputs, for display, an indication specifying a recommended software image for the first element 610A, the recommended software image selected based on the software image score for the one or more software images used by the elements 610.

To upgrade network devices, such as elements 610, the first step is to pull the image required for upgrade. Controller device 606 may receive, such as from an administrator or other user, upgrade request 604. Upgrade request 604 may include, for example, a command indicating an intent to upgrade the software of elements 610 from a software release "A" to a new or updated software release "B." The software of an element 610 may include an image. An image is a serialized copy of the state of a computer system stored in some non-volatile form such as a file. Upgrade request 604 may indicate a software upgrade image to be used for upgrading elements 610 to the updated software release "B." With respect to the foregoing example, upgrade request 604 may include a comment to upgrade the software of element 610A with the recommended software image. In response to receiving upgrade request 604, controller device 606 is configured to deploy the upgrade to one or more elements 610.

Therefore, from one perspective, there have been described techniques for recommending particular versions of a software image for installation on a network device. In one example, a cloud-based Wide-Area Network (WAN) assurance system determines, for a first entity, entities having similar entity profiles as an entity profile of the first entity. The system obtains historical information, such as historical performance information, for network devices of the entities having similar entity profiles as the entity profile of the first entity. The system computes, based on the historical information, software image scores for software images used by the network devices. The system outputs, for display, an indication specifying a recommended software image to install on a first network device of the first entity, the recommended software image selected based on the software image scores for the software images used by the network devices.

Further examples are presented in the following numbered clauses.
Clause 1. A method comprising: obtaining, by a network system, a first customer profile for a first customer having a first network device; determining, by the network system, one or more customers having similar customer profiles as the first customer profile, the one or more customers having a plurality of network devices; obtaining, by the network system, historical information for each network device of the plurality of network devices of the one or more customers having similar customer profiles as the first customer profile; computing, by the network system and based on the historical information for each of the plurality of network devices, a software image score for each software image used by the plurality of network devices; and outputting, by the network system and for display, an indication specifying a recommended software image for the first network device, the recommended software image selected based on the software image score for each software image used by the plurality of network devices.
Clause 2. The method of clause 1, wherein the recommended software image has a first software image score, and wherein the method further comprises computing, by the network system and based on the historical information for each of the plurality of users, a second software image score for a software image in use by the first network device, and wherein outputting, for display, the indication specifying the recommended software image comprises outputting, for presentation to the user, an indication specifying: the recommended software image; the first software image score of the recommended software image; the software image in use by the first network device; and the second software image of the software image in use by the first network device.
Clause 3. The method of clause 1 or 2, wherein the indication further specifies a performance gain projected to be realized by the first network device upon installing the recommended software image.
Clause 4. The method of clause 1, 2 or 3, wherein obtaining the first customer profile comprises generating the first customer profile from a historical performance of the first network device, and wherein determining the one or more customers having similar customer profiles as the first customer profile comprises determining that the plurality of network devices of the one or more customers have a similar historical performance as the historical performance of the first network device.
Clause 5. The method of any of clauses 1 through 4, wherein obtaining the first customer profile comprises generating the first customer profile from historical network connectivity data comprising one or more of: an uptime of the first network device, a downtime of the first network device, or a packet loss, jitter, or bandwidth of network traffic forwarded by the first network device, and wherein determining the one or more customers having similar customer profiles as the first customer profile comprises determining that the plurality of network devices one or more customers a similar historical network connectivity as the historical network connectivity of the first network device.
Clause 6. The method of any of clauses 1 through 5, wherein obtaining the first customer profile comprises generating the first customer profile from a historical application performance of one or more applications executed on the first network device, and wherein determining the one or more customers having similar customer profiles as the first customer profile comprises determining that one or more applications executed on the plurality of network devices of the one or more customers have a similar historical application performance as the historical application performance of the first network device.
Clause 7. The method of any of clauses 1 through 6, wherein obtaining the first customer profile comprises generating the first customer profile from a model, a type, or a configuration of the first network device, and wherein determining the one or more customers having similar customer profiles as the first customer profile comprises determining that the plurality of network devices of the one or more customers have a similar model, a similar type, or a similar configuration as the model, the type, or the configuration of the first network device.
Clause 8. The method of any of clauses 1 through 7, wherein the historical information for each network device of the plurality of network devices comprises one or more of: health information for the network device; health information for a network to which the network device is connected; or health information for an application associated with the network device.
Clause 9. The method of clause 8, wherein the historical information for each network device of the plurality of network devices comprises the health information for the network device, the health information for the gateway for the network device comprising one or more of:
   information about a power supply of the device; information about a memory of the device;
   information about a temperature of the device; or information about a central processing unit (CPU) of the device.
Clause 10. The method of any of clauses 8 through 9, wherein the historical information for each network device of the plurality of network devices comprises the health information for the network to which the network device is connected, the health information for the network comprising one or more of: a connectivity status of the network device to the network; information about an interface of the network device; or a reachability of an Internet Services Provider (ISP) for the network device.
Clause 11. The method of any of clauses 8 through 10, wherein the historical information for each network device of the plurality of network devices comprises the health information for the application associated with the network device, the health information for the application comprising one or more of: a jitter of network traffic associated with the application; a loss of network traffic associated with the application; a latency of network traffic associated with the application; or information for one or more application services associated with the application.
Clause 12. The method of any of clauses 1 through 11, wherein the historical information for each network device of the plurality of network devices comprises: health information for the network device; health information for a network to which the network device is connected; and health information for an application associated with the network device, and wherein computing the software image score for each software image used by the plurality of network devices comprises computing the software image score for each software image used by the plurality of network devices by applying a weight to each of the health information for the network device, the health information for the network, and the health information for the application.
Clause 13. A network system comprising processing circuitry configured to: obtain a first customer profile for a first customer having a first network device; determine one or more customers having similar customer profiles as the first customer profile, the one or more customers having a plurality of network devices; obtain historical information for each network device of the plurality of network devices of the one or more customers having similar customer profiles as the first customer profile; compute, based on the historical information for each of the plurality of network devices, a software image score for each software image used by the plurality of network devices; and output, for display, an indication specifying a recommended software image for the first network device, the recommended software image selected based on the software image score for each software image used by the plurality of network devices.
Clause 14. The cloud-based WAN assurance system of clause 13, further configured to perform the method of any of clauses 1 through 12.
Clause 15. A computer-readable medium comprising instructions that, when executed, are configured to cause processing circuitry to execute a network system configured to: obtain a first customer profile for a first customer having a first network device; determine one or more customers having similar customer profiles as the first customer profile, the one or more customers having a plurality of network devices; obtain historical information for each network device of the plurality of network devices of the one or more customers having similar customer profiles as the first customer profile; compute, based on the historical information for each of the plurality of network devices, a software image score for each software image used by the plurality of network devices; and output, for display, an indication specifying a recommended software image for the first network device, the recommended software image selected based on the software image score for each software image used by the plurality of network devices.
Clause 16. The computer-readable medium of clause 15, further configured to cause the processing circuitry to perform the method of any of clauses 1 through 12.
Clause 18. A method as described in the specification.
Clause 19. A device as described in the specification.
Clause 20. A system as described in the specification.
Clause 21. A computer-readable medium as described in the specification.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium or a computer-readable transmission medium, containing instructions. Instructions embedded in, encoded in and/or conveyed by a computer-readable medium may cause a programmable processor, or other processor, to perform the method, e.g., when the instructions are executed. A computer-readable medium may be a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media. A computer-readable medium may also or alternatively be a computer-readable transmission medium, such as a carrier wave or transmission signal received over a communications interface. A computer-readable transmission medium may occur between components of a computer system (such as a bus conveying instructions from a memory (e.g. memory 312) to processor (e.g. processor 306) and/or may occur between plural separate computer systems (such as a computer network conveying instructions).

## Claims

1. A network system comprising processing circuitry configured to:
determine, for a first entity, one or more entities having similar entity profiles as an entity profile of the first entity, the one or more entities having a plurality of network devices;
compute, based on historical information for each network device of the plurality of network devices of the one or more entities having similar entity profiles as the entity profile of the first entity, one or more software image scores for one or more software images used by the plurality of network devices; and
output, for display, an indication specifying a recommended software image to install on one or more network devices of the first entity, the recommended software image selected based on the one or more software image scores for the one or more software images used by the plurality of network devices.

2. The network system of claim 1,
wherein the recommended software image has a first software image score, and
wherein the processing circuitry is further configured to compute, based on the historical information for each network device of the plurality of network devices of the one or more entities having similar entity profiles as the entity profile of the first entity, a second software image score for a software image used by the first network device, and
wherein to output, for display, the indication specifying the recommended software image, the processing circuitry is configured to output, for display, an indication specifying:
the recommended software image;
the first software image score of the recommended software image;
the software image used by the first network device; and
the second software image of the software image used by the first network device.

3. The network system of any of claims 1 through 2, wherein the indication further specifies a performance gain projected to be realized by the first network device upon installing the recommended software image.

4. The network system of any of claims 1 through 3,
wherein the processing circuitry is further configured to generate the entity profile of the first entity from a historical performance of the first network device, and
wherein to determine the one or more entities having similar entity profiles as the entity profile of the first entity, the processing circuitry is configured to determine that the plurality of network devices of the one or more entities have a similar historical performance as the historical performance of the first network device.

5. The network system of any of claims 1 through 4,
wherein the processing circuitry is further configured to generate the entity profile of the first entity from historical network connectivity data comprising one or more of:
an uptime of the first network device,
a downtime of the first network device, or
a packet loss, jitter, or bandwidth of network traffic forwarded by the first network device, and
wherein to determine the one or more entities having similar entity profiles as the entity profile of the first entity, the processing circuitry is configured to determine that the plurality of network devices of the one or more entities have a similar historical network connectivity as the historical network connectivity of the first network device.

6. The network system of any of claims 1 through 5,
wherein the processing circuitry is further configured to generate the entity profile of the first entity from a historical application performance of one or more applications executed on the first network device, and
wherein to determine the one or more entities having similar entity profiles as the entity profile of the first entity, the processing circuitry is configured to determine that the plurality of network devices of the one or more entities have a similar historical application performance as the historical application performance of the first network device.

7. The network system of any of claims 1 through 6,
wherein the processing circuitry is further configured to generate the entity profile of the first entity from a model, a type, or a configuration of the first network device, and
wherein to determine the one or more entities having similar entity profiles as the entity profile of the first entity, the processing circuitry is configured to determine that the plurality of network devices of the one or more entities have a similar model, a similar type, or a similar configuration as the model, the type, or the configuration of the first network device.

8. The network system of any of claims 1 through 7, wherein the historical information for each network device of the plurality of network devices of the one or more entities comprises one or more of:
health information for the network device;
health information for a gateway device to which the network device is connected;
health information for a network to which the network device is connected; or
health information for an application associated with the network device.

9. The network system of any of claims 1 through 8, wherein the historical information for each network device of the plurality of network devices of the one or more entities comprises health information for the network device, the health information for the network device comprising one or more of:
information about a power supply of the network device;
information about a memory of the network device;
information about a temperature of the network device; or
information about a central processing unit (CPU) of the network device.

10. The network system of any of claims 1 through 9, wherein the historical information for each network device of the plurality of network devices of the one or more entities comprises health information for a network to which the network device is connected, the health information for the network comprising one or more of:
a connectivity status of the network device to the network;
information about an interface of the network device; or
a reachability of an Internet Services Provider (ISP) for the network device.

11. The network system of any of claims 1 through 10, wherein the historical information for each network device of the plurality of network devices of the one or more entities comprises health information for an application associated with the network device, the health information for the application comprising one or more of:
a jitter of network traffic associated with the application;
a loss of network traffic associated with the application;
a latency of network traffic associated with the application; or
information for one or more application services associated with the application.

12. The network system of any of claims 1 through 11, wherein the historical information for each network device of the plurality of network devices of the one or more entities comprises:
health information for the network device;
health information for a network to which the network device is connected; and
health information for an application associated with the network device, and
wherein to compute the one or more software image scores for the one or more software images used by the plurality of network devices, the processing circuitry is configured to compute the one or more software image scores for the one or more software images used by the plurality of network devices by applying a weight to each of the health information for the network device, the health information for the network, and the health information for the application for each network device of the plurality of network devices of the one or more entities.

13. A method as performed by the network system of any of claims 1 through 12.

14. A computer-readable medium comprising instructions for causing one or more programmable processors to perform a method as performed by the network system of any of claims 1 through 12.
